# EUROPÄISCHE PATENTSCHRIFT

(11) **EP 3 708 439 B1**
(45) Veröffentlichungstag und Bekanntmachung des Hinweises auf die Patenterteilung: **08.09.2021**
(21) Anmeldenummer: 20162245.3
(22) Anmeldetag: 10.03.2020
(51) Int. Cl.: B60R 21/38, E05D 3/14

(54) **AUFSTELLBARES KLAPPENSCHARNIER**
LIFTING HINGE FOR BONNET
CHARNIÈRE D'ARTICULATION POUR CAPOT SOULEVABLE

(30) Priorität: 13.03.2019 DE 102019106438
(43) Veröffentlichungstag der Anmeldung: 16.09.2020
(73) Patentinhaber: Edscha Engineering GmbH, 42855 Remscheid (DE)
(72) Erfinder: Bauer, Manfred, 42855 Remscheid (DE)
(74) Vertreter: Sparing, Rolf Klaus

(56) Entgegenhaltungen:
- DE-A1-102006 010 801

## Beschreibung

Die Erfindung betrifft ein aufstellbares Klappenscharnier nach dem Oberbegriff des Anspruchs 1, insbesondere ein verriegelbar aufstellbares Klappenscharnier, welches für den Einsatz in einem Fußgängerschutzsystem geeignet ist.

Aus der Praxis sind verschiedene Klappenscharniere bekannt, die dazu bestimmt sind, im Falle eines detektierten Fußgängeraufpralls eine mit dem Klappenscharnier gekoppelte Fronthaube in eine aufgestellte Stellung zu verlagern, beispielsweise durch ein Federpaket, eine pyrotechnische Auslöseanordnung oder dergleichen, damit die in einer aufgestellten Stellung beabstandet von den gefährdenden Komponenten des Motorinnenraums gehaltene Fronthaube eine Deformation erfährt, die den Aufprall bremst. Darüber hinaus kann auch die Auslöseeinrichtung eine Bremsung bzw. einen Dämpfungseffekt der von dem Fußgängeraufprall herabgedrückten Fronthaube definieren. Wichtig hierbei ist auch, dass die Aufstellbewegung möglichst ohne große Nachschwingbewegung der Fronthaube durchgeführt wird.

DE 10 2006 010 801 zeigt ein aufstellbares Klappenscharnier nach dem Oberbegriff des Anspruchs 1 mit einem einer Klappe zugeordnetem Klappenteil und einem einer Fahrzeugkarosserie zugeordnetem Karosserieteil, wobei das Klappenteil und das Karosserieteil über eine als Mehrgelenk ausgebildete Gelenkanordnung gelenkig verbunden sind. Das Klappenscharnier umfasst weiter eine als Hubzylinder ausgebildete Auslöseanordnung, die das Klappenteil gegenüber dem Karosserieteil aufstellt, und eine Verriegelungsvorrichtung, welche eine Verriegelung einer Kolbenstange in einem Hohlzylinder der Auslöseanordnung und hierdurch zudem eine Verriegelung der Aufstellung des Klappenteil über dem Karosserieteil bewirkt. Weiter umfasst das aufstellbare Klappenscharnier eine Begrenzungsanordnung zur Begrenzung einer Verlagerung des Klappenteils relativ zu dem Karosserieteil, wobei die Begrenzungsanordnung ein als Fanghebel ausgebildetes erstes Begrenzungselement und ein als ein von dem Klappenteil nach unten hervorstehendes Profil ausgebildetes zweites Begrenzungselement umfasst. Das erste Begrenzungselement ist dabei bei einer Aufstellung des Klappenteil gegenüber dem Karosserieteil von einer Passivstellung in eine Begrenzungsstellung verlagerbar, wobei das erste Begrenzungselement über ein als Spiralfeder ausgebildetes Vorspannmittel in Richtung auf die Begrenzungsstellung vorgespannt ist.

DE 10 2015 007 336 A1 zeigt ein Klappenscharnier mit einem einer Klappe zugeordneten Klappenteil, welches aus einem Klappenoberteil und einem Klappenunterteil besteht, welche scherenartig zueinander über ein Eingelenk schwenkbar miteinander verbunden sind. Weiter umfasst das Klappenscharnier ein der Fahrzeugkarosserie zugeordnetes Karosserieteil, welches ortsfest an der Karosserie befestigt ist. Das Klappenteil und das Karosserieteil sind über eine als Viergelenk ausgebildete Gelenkanordnung gelenkig miteinander verbunden, sodass die an dem Klappenteil befestigte Klappe zum einen bei geöffnetem Haubenschloss in eine Servicestellung angehoben werden kann, um beispielsweise den Motorinnenraum einzusehen, und zum anderen im Falle eines Unfalles angehoben werden kann, um die Haube von dem Motorblock zu beabstanden. Das gezeigte Klappenscharnier umfasst weiter eine Auslöseanordnung, welches aus einem Linearaktuator besteht. Die Auslöseanordnung bietet im Falle eines Unfalls die Möglichkeit, das Klappenteil gegenüber dem Karosserieteil automatisch aufzustellen, um die Klappe von dem Motorblock zu beabstanden und so möglichst zu verhindern, dass ein Fußgänger schwere Verletzungen aufgrund eines Aufpralls auf den harten Motorblock erleidet. Das Klappenscharnier umfasst weiter eine Verriegelungsvorrichtung zur Verriegelung einer Aufstellung des Klappenteils gegenüber dem Karosserieteil. Die Verriegelungsvorrichtung umfasst ein Riegelelement, welches über einen an dem Klappenteil befestigten Bolzen schwenkbar um eine horizontale Achse an dem Klappenoberteil angeordnet ist, wobei das Riegelelement über eine Sollrissstelle zunächst an einer Verschwenkung gehindert ist. Das Riegelelement schlägt im nicht aufgestellten Zustand des Klappenscharniers gegen einen fest an dem Klappenunterteil angebrachten Bolzen an, sodass eine Aufstellung des Klappenscharnieres unterbunden ist. Durch eine Krafteinwirkung seitens der Auslöseanordnung auf eine der Sollrissstelle gegenüberliegenden Seite des Riegelelements wird die Verbindung zwischen dem Regelelement und dem Klappenoberteil an der Sollrissstelle aufgebrochen, sodass nachfolgend eine Verschwenkung des Riegelelementes erfolgt und entsprechend eine Freigabe der Aufstellbewegung resultiert. Weiter ist an einem dem ein Gelenk gegenüberliegenden Ende des Klappenoberteils ein Haltesteg vorgesehen, welcher eine Rastfläche aufweist. Bei einer Aufstellung des Klappenscharnier überfährt der Haltesteg bzw. die Rastfläche eine abkragende Oberkante des Klappenunterteils, wobei bei einer Rückstellung die Rastfläche auf der abkragende Oberkante des Klappenunterteil aufliegt und so eine Rückbewegung des Klappenoberteils in Richtung auf das Klappenunterteil begrenzt. Nachteilig an dem gezeigten Klappenscharnier ist, dass die Begrenzung der Verlagerung des Klappenunterteils und des Klappenoberteils nicht ein Absinken des Klappenteils insgesamt relativ zu dem Karosserieteil verhindern kann. Zudem ist nicht ausreichend sichergestellt, dass die Gelenkanordnung weiterhin Schwingungsbewegung auf die Klappe überträgt.

DE 10 2017 130 621 A1 zeigt ein Klappenscharnier mit einem einer Klappe zugeordneten Klappenteil, bestehend aus ein Klappenoberteil und einem Klappenunterteil, welche über ein Eingelenk schwenkbar miteinander verbunden sind. Das Klappenscharnier umfasst weiter ein Karosserieteil, welches einer Karosserie zugeordnet ist. Das Klappenteil und das Karosserieteil sind über eine als Viergelenk ausgebildete Gelenkanordnung gelenkig miteinander verbunden, sodass sowohl eine Verschwenkung der Klappe in eine Servicestellung als auch eine Aufstellbewegung im Falle eines Unfalls möglich sind. An dem Klappenoberteil ist eine Anschlagverbindung, welche einen Schlitz definiert, vorgesehen. Gemeinsam mit einem fest an dem Karosserieteil vorgesehenen Bolzen bildet die Anschlagverbindung eine Begrenzungsanordnung, welche eine Verlagerung des Klappenteils relativ zu dem Karosserieteil bei einer Aufstellbewegung begrenzt. Bei einer Anhebung des Klappenteil relativ zu dem Karosserieteil wandert die Anschlagverbindung derart gemeinsam mit dem Klappenoberteil nach oben, dass der an dem Karosserieteil vorgesehene Bolzen durch den Schlitz fährt und so ab einem gewissen Punkt ein Anschlagen des Bolzens an dem Ende des Schlitzes der Anschlagverbindung zu einer effektiven Begrenzung der Verlagerung des Klappenteils relativ dem Karosserieteil führt. Das Klappenscharnier umfasst weiter eine als Linearaktuator ausgebildete Auslösevorrichtung, welche die Anhebung des Klappenteil relativ zu dem Karosserieteil antreibt. Nachteilig an dem gezeigten Klappenscharnier ist, dass die Begrenzungsanordnung starr ausgebildet ist und so ein Rückschlagen in die nicht aufgestellte Position des Klappenscharnier erfolgen kann bzw. eine erhebliche Schwingungsbewegung der Klappe auftreten kann und so die Gefahr besteht, dass die Klappe dem Fußgänger im ungünstigsten Fall entgegenschnellt. Weiter besteht die Gefahr, dass aufgrund von Toleranzen bei der Fertigung der Anschlagverbindung, des Bolzens oder der Gelenkanordnung eine unbeabsichtigte Begrenzung oder Blockierung einer Verschwenkung des Klappenteils in eine Servicestellung durch die Begrenzungsanordnung auftritt.

US 2017/0 050 610 A1 zeigt ein aufstellbaren Klappenscharnier, umfassend ein einer Klappe zugeordnetes Klappenteil, ein einer Fahrzeugkarosserie zugeordnetes Karosserieteil, eine das Klappenteil und das Karosserieteil gelenkig verbindende Gelenkanordnung, wobei die Gelenkanordnung einen ersten Lenker umfasst, welcher über ein Eingelenk zum einen mit dem Karosserieteil und über ein zweites Eingelenk mit dem Klappenteil gelenkig verbunden ist. Das gezeigte aufstellbare Klappenscharnier umfasst weiter eine Auslöseanordnung, die das Klappenteil gegenüber dem Karosserieteil ausstellt, eine Verriegelungsvorrichtung, welche durch einen Scherstift gebildet wird, der zwischen dem Klappenteil und dem ersten Lenker vorgesehen ist und hierdurch eine Verriegelung einer Aufstellung des Klappenteils gegenüber dem Karosserieteil verriegelt. Weiter umfasst das gezeigte aufstellbare Klappenscharnier eine Begrenzungsanordnung, welche durch ein erstes Verbindungsglied und ein zweites Verbindungsglied gebildet wird, wobei Begrenzungsanordnung bei einer Aufstellung des Klappenteil gegenüber dem Karosserieteil von einer Passivstellung in eine Begrenzungsstellung verlagert wird. Nachteilig an dem gezeigten aufstellbaren Klappenscharnier ist, dass die Begrenzungsanordnung durch zwei lang erstreckte Metallstreifen gebildet wird, welche entsprechend einen großen Bauraum benötigen und das gesamte Klappenscharnier nicht sehr kompakt ausgebildet ist. Zudem besteht aufgrund von Fertigungstoleranzen die Gefahr einer Verkantung der Verbindungsglieder untereinander, was die Gefahr birgt, dass die Begrenzungsanordnung eine funktionsgemäße Aufstellung des Klappenscharniers verhindert.

EP 2 495 140 A1 zeigt ein aufstellbaren Klappenscharnier, umfassend ein einer Klappe zugeordnetes Klappenteil, welches ein Klappenoberteil und ein Klappenunterteil umfasst, ein einer Fahrzeugkarosserie zugeordnetes Karosserieteil, eine das Klappenteil und das Karosserieteil gelenkig verbindende Gelenkanordnung, wobei die Gelenkanordnung durch zwei Lenker, welche über Eingelenke zum einen mit dem Karosserieteil und zum anderen mit dem Klappenteil gelenkig verbunden sind, gebildet wird. Weiter umfasst das gezeigte aufstellbaren Klappenscharnier eine Auslöseanordnung, die das Klappenteil über den Karosserieteil aufstellt. Weiter umfasst das gezeigte aufstellbaren Klappenscharnier eine Begrenzungsanordnung, welches ein als Metallstreifen ausgebildetes Begrenzungselement umfasst, welches zwischen dem Klappenunterteil und dem Klappenoberteil durch Vernietung oder Verschraubung festgelegt ist. Die Begrenzungsanordnung bzw. der Metallstreifen wird bei einer Aufstellung des Klappenteil gegenüber dem Karosserieteil von einer Verriegelungsstellung in eine Begrenzungsstellung verlagert, indem der Metallstreifen von einer gefalteten Form in eine gestreckte Form unverformt wird. Nachteilig an der gezeigten Begrenzungsanordnung ist, dass diese nur eine einmalige Verwendung möglich macht, da die Begrenzung über eine Verformung erfolgt, die nicht einfach reversibel ist, sondern einen Ersatz des Metallstreifens erfordert.

Es ist die Aufgabe der Erfindung, ein aufstellbares Klappenscharnier anzugeben, das kompakt ausgebildet ist und eine verbesserte Aufstellkinematik bereitstellt.

Diese Aufgabe wird erfindungsgemäß durch ein aufstellbares Klappenscharnier mit den Merkmalen des unabhängigen Anspruchs 1 gelöst.

Gemäß einem Aspekt der Erfindung ist ein aufstellbares Klappenscharnier geschaffen, umfassend ein einer Klappe zugeordnetes Klappenteil, ein einer Fahrzeugkarosserie zugeordnetes Karosserieteil, eine das Klappenteil und das Karosserieteil gelenkig verbindende Gelenkanordnung, eine Auslöseanordnung, die das Klappenteil gegenüber dem Karosserieteil aufstellt, eine Verriegelungsvorrichtung zur Verriegelung einer Aufstellung des Klappenteils gegenüber dem Karosserieteil und eine Begrenzungsanordnung zur Begrenzung einer Verlagerung des Klappenteils relativ zu dem Karosserieteil, wobei die Begrenzungsanordnung ein erstes Begrenzungselement und ein zweites Begrenzungselement umfasst und bei einer Aufstellung des Klappenteils gegenüber dem Karosserieteil von einer Passivstellung in eine Begrenzungsstellung verlagert wird. Das erste Begrenzungselement ist als Schwenkstütze ausgebildet, wobeidie Schwenkstütze über ein Vorspannmittel in Richtung auf die Begrenzungsstellung vorgespannt ist. Erfindungsgemäß weist das erste Begrenzungselement an einem ersten Ende einen Kopplungsabschnitt auf, welcher für eine Kopplung mit dem zweiten Begrenzungselement vorgesehen ist. Erfindungsgemäß weist das erste Begrenzungselement an einem zweiten Ende einen Anschlagabschnitt auf. Vorteilhaft wird durch eine Verlagerungsbewegung einer oder mehrerer Bestandteile der Begrenzungsanordnung die Möglichkeit geschaffen, eine kompakte Bauweise der Begrenzungsanordnung zu erreichen und gleichzeitig eine verbesserte und sicherere Begrenzung der Verlagerung des Klappenteils relativ zu dem Karosserieteil zu realisieren. Insbesondere kann die Begrenzungsanordnung durch die Möglichkeit der Verlagerung von einer Passivstellung in eine Begrenzungsstellung derart ausgebildet sein, dass neben einer rein begrenzenden Funktion vorteilhaft dynamisch dämpfende Eigenschaften realisiert werden können, welche besonders vorteilhaft sicherstellen, dass die Klappe bei einer Aufstellbewegung nicht über einen bestimmten Amplitudenwert hinaus überschwingt oder nachschwingt. Weiter vorteilhaft ist durch die Vorspannung der Schwenkstütze über das Vorspannmittel sichergestellt, dass eine Verlagerung der Begrenzungsanordnung in die Begrenzungsstellung ohne zusätzliche Kopplung mit anderen Teilen des Klappenscharniers möglich ist und zudem durch entsprechende Ausgestaltung des Vorspannmittels eine sowohl schnelle als auch präzise Verlagerung der Begrenzungsanordnung in die Begrenzungsstellung sicher erfolgt.

Die Begrenzungsanordnung umfasst ein erstes Begrenzungselement und ein zweites Begrenzungselement. Das erste Begrenzungselement und das zweite Begrenzungselement wirken dabei derart miteinander, dass eine Verlagerung des Klappenteils und des Karosserieteils relativ zueinander in einem eingeschränkten Bereich nach der Auslösung der Aufstellbewegung verbleibt und zügig einem vorbestimmten Wert insbesondere bezüglich einer gewünschten Aufstellhöhe einnimmt. Das erste Begrenzungselement und das zweite Begrenzungselement sind dabei in einem verriegelten Zustand des Klappenscharniers zunächst nicht miteinander gekoppelt und werden erst bei einer Aufstellung des Klappenteil gegenüber dem Karosserieteil derart verlagert, dass eine Kopplung des ersten Begrenzungselementes und des zweiten Begrenzungselementes erfolgt.

Zweckmäßigerweise ist das erste Begrenzungselement um eine horizontale Achse schwenkbar an einem von Klappenteil, Gelenkanordnung und Karosserieteil angeordnet. Hierdurch wird vorteilhaft eine Verlagerung der Begrenzungsanordnung über eine Drehbewegung realisiert, welche eine kompakte Bauweise und so einen sichereren Betrieb der Begrenzungsanordnung nach sich zieht. Alternativ oder zusätzlich hierzu kann das erste Begrenzungselement auch eine lineare Bewegung ausführen, sodass gegebenenfalls größere Abstände zwischen dem ersten Begrenzungselement und dem zweiten Begrenzungselement bei einer Aufstellbewegung überbrückt werden können, ohne das erste Begrenzungselement in seinen Proportionen größer ausgestalten zu müssen.

Vorteilhafter Weise ist das zweite Begrenzungselement an einem von Klappenteil, Gelenkanordnung Karosserieteil angeordnet. Besonders bevorzugt ist das zweite Begrenzungselement an der Gelenkanordnung und das erste Begrenzungselement an einem von Klappenteil und Karosserieteil angeordnet. Vorteilhaft wird so eine Kopplung zwischen der Gelenkanordnung und einem von Klappenteil und Karosserieteil hergestellt, welche insbesondere in Kombination mit einem über ein Vorspannmittel vorgespanntes erstes Begrenzungselement eine dynamische Dämpfung der Aufstellbewegung des Klappenteils relativ zu dem Karosserieteil zur Folge hat und ein entsprechend schnelles Einschwingen auf eine vorbestimmte Aufstellungshöhe ermöglicht.

Besonders bevorzugt sind das erste Begrenzungselement und das zweite Begrenzungselement in der Begrenzungsstellung der Begrenzungsanordnung derart miteinander gekoppelt, dass eine Verlagerung des Klappenteils in Richtung auf das Karosserieteil begrenzt wird. Hierdurch wird sichergestellt, dass die Klappe nach der Aufstellung, welche durch die Auslöseanordnung angetrieben wurde, nicht unter einen minimalen Wert der Aufstellhöhe zurückgestellt wird. Vorteilhafter Weise ist die Kopplung zwischen dem ersten Begrenzungselement und dem zweiten Begrenzungselement darüber hinaus derart ausgebildet, dass eine Verlagerung des Klappenteils in Richtung weg von dem Karosserieteil, also in Aufstellrichtung, zumindest gebremst oder gedämpft wird, sodass nach der Auslösung der Aufstellbewegung eine möglichst flache Einschwingkurve der Klappenaufstellhöhe realisiert wird.

Die Schwenkstütze ist vorteilhafter Weise derart ausgebildet, dass diese um eine horizontale Achse schwenkbar an dem Klappenscharnier angeordnet ist. Besonders bevorzugt ist die Schwenkstütze schwenkbar um eine horizontale Achse an dem Klappenteil angeordnet. Besonders bevorzugt ist der Kopplungsabschnitt als Haken ausgebildet, welcher ein zumindest teilweises Umgreifen des zweiten Begrenzungselementes ermöglicht.

Der Anschlagabschnitt weist vorteilhafter Weise eine Anschlagfläche auf, welche in der Passivstellung dazu dient, eine Verlagerung des ersten Begrezungslementes in die Begrenzungsstellung zu verhindern. Besonders bevorzugt ist an dem Klappenscharnier ein entsprechendes Anschlagelement vorgesehen, welches bei einer Aufstellbewegung des Klappenscharnier derart verlagert wird, dass der Anschlagabschnitt freigegeben wird und so eine Verlagerung der Schwenkstütze die Begrenzungsstellung ebenfalls freigegeben ist.

In einer bevorzugten Ausgestaltung ist vorgesehen, dass das zweite Begrenzungselement als Bolzen ausgebildet ist. In einer zweckmäßigen Weiterbildung ist der Bolzen fest an einem ersten Lenker der Gelenkanordnung angeordnet. Vorteilhaft ist so eine schnelle und sichere Kopplung zwischen dem ersten Begrenzungselement, insbesondere wenn dieses als Schwenkstütze oder auch als Fanghaken ausgebildet ist, möglich, indem die Schwenkstütze mit seinem Kopplungsbereich das als Bolzen ausgebildete zweite Begrenzungselement zumindest teilweise umgreift.

In einer zweckmäßigen Ausgestaltung umfasst das Klappenteil ein Klappenoberteil und ein Klappenunterteil, wobei das Klappenoberteil und das Klappenunterteil schwenkbar miteinander gekoppelt sind. Besonders bevorzugt wird durch Verschwenkung des Klappenoberteils und des Klappenunterteils die Verlagerung der Begrenzungsanordnung von einer Passivstellungen eine Begrenzungsstellung freigegeben. Vorteilhafter Weise wird so sichergestellt, dass die Freigabe der Verlagerung bzw. die Verlagerung der Begrenzungsanordnung in die Begrenzungsstellung erst nach der Auslösung der Aufstellbewegung erfolgt, sodass eine entsprechend kompakte Bauweise der Begrenzungsanordnung ermöglicht ist. Zweckmäßigerweise ist an dem Klappenoberteil eine Anschlagfläche vorgesehen, welche eine Verlagerung der Begrenzungsanordnung in die Begrenzungsstellung in der Passivstellung verhindert. Vorteilhaft wird so bei einer Verschwenkung des Klappenoberteil in Richtung auf eine aufgestellte Position die Anschlagfläche entsprechend mit verlagert und so eine Freigabe der Verlagerung der Begrenzungsanordnung von der Passivstellung in die Begrenzungsstellung realisiert.

Weitere Vorteile, Merkmale und Eigenschaften der Erfindung ergeben sich aus der nachstehenden Beschreibung eines bevorzugten Ausführungsbeispiels sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel eines aufstellbaren Klappenscharniers in einer Seitenansicht im verriegelten Zustand.
- Fig. 2: zeigt das in Fig. 1 gezeigte Ausführungsbeispiels eines aufstellbaren Klappenscharniers aus einer Rückansicht.
- Fig. 3: zeigt eine Detailansicht der Schwenkstütze aus Fig. 2.
- Fig. 4: zeigt das Klappenscharnier aus Fig. 1 in entriegelter und aufgestellter Stellung in einer Seitenansicht.

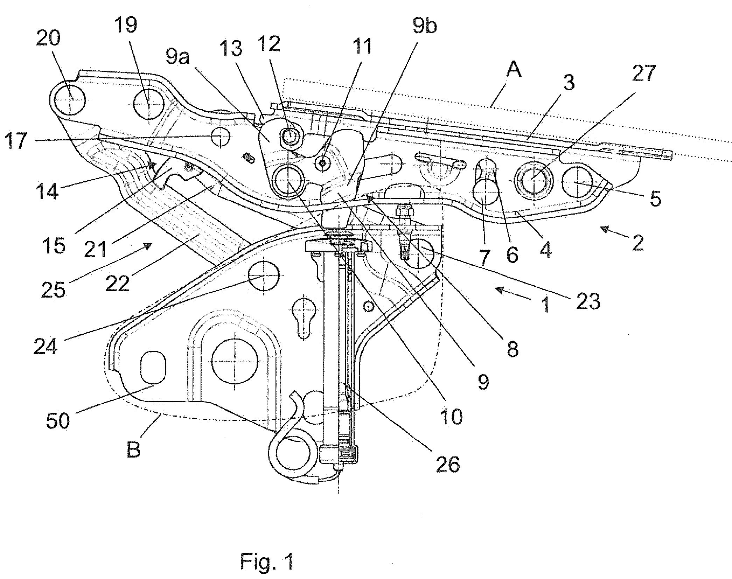

Fig. 1 zeigt ein bevorzugtes Ausführungsbeispiel eines erfindungsgemäßen aufstellbaren Klappenscharniers 1 in einer Seitenansicht im verriegelten Zustand. Das Klappenscharnier 1 umfasst ein einer Klappe A zugeordnetes Klappenteil 2 und ein der Fahrzeugkarosserie zugeordnetes Karosserieteil 50, wobei das Klappenteil 2 aus einem Klappenoberteil 3, an welchem die Klappe A angeschlossen ist, und einem Klappenunterteil 4 besteht. Das Klappenoberteil 3 und das Klappenunterteil 4 sind über ein Eingelenk 5 schwenkbar miteinander verbunden, sodass das Klappenoberteil 3 und das Klappenunterteil 4 scherenartig zueinander verschwenkt werden können. Durch diese scherenartige Kopplung wird insbesondere ermöglicht, dass das dem hier nicht gezeigten Haubeschloss abgewandte Ende der Klappe A gegenüber dem Motorblock in bekannter Weise nach oben anzuheben bzw. aufzustellen.

Die Verschwenkung des Klappenoberteils 3 gegenüber dem Klappenunterteil 4 um das Eingelenk 5 wird dadurch begrenzt, dass das Klappenunterteil 4 ein Anschlaglangloch 6 in einer Seitenwand aufweist, wobei ein fest mit dem Klappenoberteil 3 verbundener Anschlagbolzen 7 durch das Anschlagloch 6 hindurchragt, sodass insbesondere hin zu einer aufgestellten Position des Klappenoberteils 3 und des Klappenunterteils 4, in welcher diese einen Winkel miteinander einschließen, ein entsprechender Anschlag geschaffen wird.

In einem mittleren Abschnitt des Klappenteils 2 ist eine Verriegelungsvorrichtung 8 angeordnet, welche eine Aufstellbewegung des Klappenteils 2 gegenüber dem Karosserieteil 50 verriegelt. Die Verriegelungsvorrichtung 8 umfasst eine Sperrklinke 9, welche über ein Eingelenk 10 drehbar mit dem Klappenunterteil 4 verbunden ist. Die Sperrklinke 9 weist dabei einen Veriegelungsabschnitt 9a, welcher einen an dem Klappenoberteil 3 fest angeordneten Verriegelungsbolzen 12 umgreift und einen Auslöseabschnitt 9b auf, welcher mit einem als Linearaktuator ausgebildeten Auslöseanordnung 26 gekoppelt werden kann. Zwischen dem Auslöseabschnitt 9b der Sperrklinke 9 und den Klappenunterteil 4 ist ein als Sollbruchstelle vorgesehener Scherstift 11 angeordnet, welcher im normalen Betrieb des Fahrzeugs verhindern soll, dass eine unbeabsichtigte Entriegelung des Klappenteils 2 auftritt.

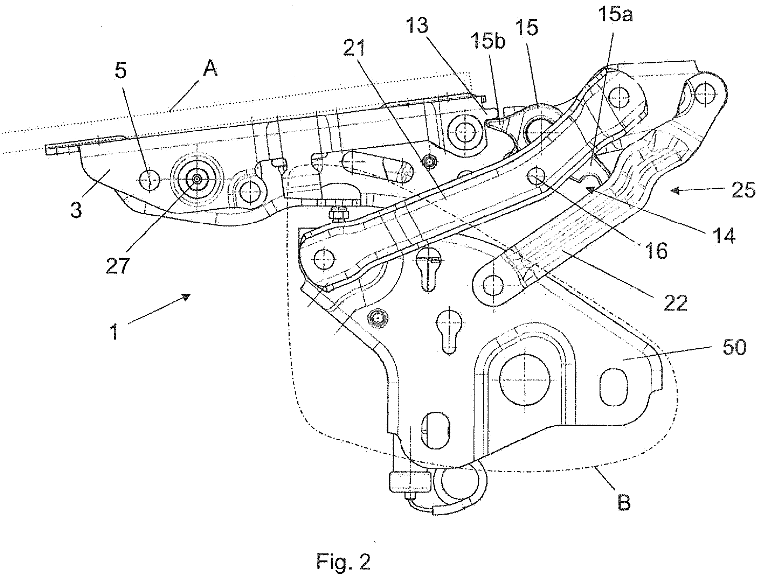

An einem dem Eingelenk 5 abgewandten Ende des Klappenoberteil 3 ist eine endseitig vorspringende Nase 13 angeformt, welche eine Anschlagfläche für eine Begrenzungsanordnung 14 bildet. Die Begrenzungsanordnung 14 umfasst ein als Schwenkstütze ausgebildetes erstes Begrenzungselement 15, welches über ein Eingelenk 17 schwenkbar mit dem Klappenunterteil 4 verbunden ist. Der detaillierte Aufbau der Begrenzungsanordnung 14 wird in Fig. 2 näher erläutert.

An einem dem Eingelenk 5 abgewandten Ende des Klappenunterteils 4 ist über ein Eingelenk 19 ein erster Lenker 21 mit einem ersten Ende schwenkbar mit dem Klappenunterteil 4 verbunden. Über ein weiteres Eingelenk 20 ist ein erstes Ende eines zweiten Lenkers 22 schwenkbar mit dem Klappenunterteil 4 verbunden. Ein dem ersten Ende gegenüberliegendes zweites Ende des ersten Lenkers 21 ist über ein Eingelenk 23 und ein dem ersten Ende gegenüberliegendes zweites Ende des zweiten Lenkers 22 ist über ein Eingelenk 24 schwenkbar mit dem Karosserieteil 50 verbunden. Die so gebildete Gelenkanordnung 25 ist entsprechend als Viergelenk ausgebildet, welches in bekannter Weise das Klappenteil 2 und das Karosserieteil 50 gelenkig miteinander verbindet und sowohl eine Verschwenkung der Klappe A von einer geschlossenen Stellung in eine Servicestellung als auch eine Aufstellung des Klappenteil 2 gegenüber dem Karosserieteil 50 im Sinne eines Fußgängerschutzes ermöglicht.

Fig. 2 zeigt das in Fig. 1 gezeigte Ausführungsbeispiels eines aufstellbaren Klappenscharniers aus einer Rückansicht. In dieser Ansicht ist gut zu erkennen, dass die der Begrenzungsanordnung 14 zugeordnete Schwenkstütze 15 einen hakenförmigen Kopplungsabschnitt 15a, welcher mit einem hier an dem ersten Lenker 21 der Gelenkanordnung 25 angeordneten, als Bolzen ausgebildeten zweiten Begrenzungselement 16 koppelbar ist, und einen gegenüberliegenden Anschlagabschnitt 15b aufweist.

Der Anschlagabschnitt 15b liegt an der Nase 13 des Klappenoberteils 3 an, sodass eine Verlagerung, also eine Drehung der Schwenkstütze 15 gegen den Uhrzeigersinn unterbunden ist. Somit wird die Begrenzungsanordnung 14 in dem hier gezeigten verriegelten Zustand des Klappenscharniers 1 in einer Passivstellung gehalten.

In dieser Ansicht ist zudem zu erkennen, dass an dem Klappenoberteil 3 ein Anschlusselement 27 benachbart zu dem Eingelenk 5 angeordnet, sodass beispielsweise ein weiteres Antriebselement zur Stützung der Aufstellungsbewegung gelenkig angeschlossen werden kann, um einen aktiven Fußgängerschutz zu realisieren.

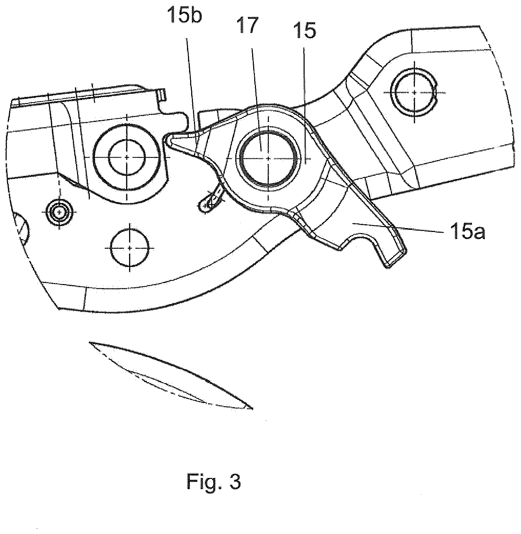

Fig. 3 zeigt eine Detailansicht der Schwenkstütze 15, in der nochmals besonders deutlich dessen Aufbau gezeigt ist, insbesondere das die Schwenkstütze 15 getrennt durch ein Eingelenk 17, um welches die Schwenkstütze 15 drehbar ist, einen hakenförmigen Kopplungsabschnitt 15a und einen Anschlagabschnitt 15b aufweist.

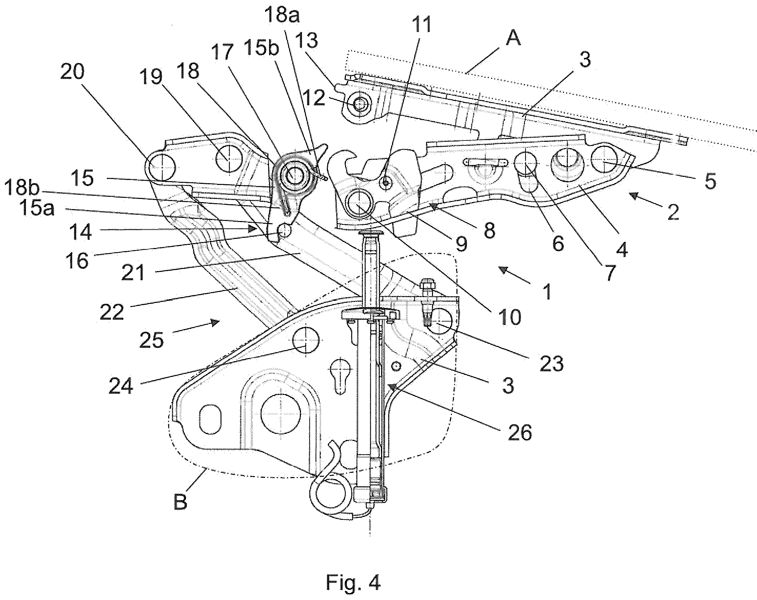

Fig. 4 zeigt das Klappenscharnier aus Fig. 1 in entriegelter und aufgestellter Stellung in einer Seitenansicht. Wie zu sehen, wurde durch die Auslöseanordnung 26 eine Kraft auf den Auslöseabschnitt 9a der Sperrklinke 9 übertragen, sodass zum einen der Scherstift 11 abgeschert und die Sperrklinke 9 gegen den Uhrzeigersinn verschwenkt wurde. Hierdurch wurde die Verriegelung bzw. die Kopplung des Klappenoberteils 3 und des Klappenunterteils 4 aufgehoben, sodass diese um das Eingelenk 5 herum zueinander scherenartig verschwenkt werden konnten und so entsprechend nunmehr einen Winkel miteinander einschließen. Die Auslöseanordnung 26 hat hierzu das Klappenunterteil 4 relativ zu dem Karosserieteil 50 angehoben, sodass in bekannter Weise eine entsprechende Anhebung der Klappe A über dem Karosserieteil 50 erfolgt ist.

Wie gut zu sehen, wurde die Schwenkstütze 15 der Begrenzungsanordnung 14 hin zu einer Begrenzungsstellung verlagert. Die Schwenkstütze 15, welche um die horizontale Achse 17 schwenkbar ist, ist hierzu über ein als Schenkelfeder ausgebildetes Vorspannmittel 18 in Richtung auf die Begrenzungsstellung vorgespannt. Die Schenkelfeder 18 ist zu diesem Zweck mit einem ersten Ende 18a mit dem Scharnierunterteil 4 und mit einem zweiten Ende 18b an dem Kopplungsabschnitt 15a der Schwenkstütze 15 angeschlossen, sodass eine entsprechende Vorspannung der Schwenkstütze 15 gegen den Uhrzeigersinn bzw. in Richtung auf die Begrenzungsstellung gegeben ist. Da die eine Anschlagfläche aufweisende Nase 13 des Klappenoberteils 3 nach oben verschwenkt wurde und nicht mehr im Kontakt mit dem Anschlagabschnitt 15b der Schwenkstütze 15 ist, kann die Schwenkstütze 15 entsprechend vorgespannt durch die Schenkelfeder 18 in die Begrenzungsstellung verlagert werden.

Die Schwenkstütze 15 wurde in dem hier gezeigten Zustand gegen den Uhrzeigersinn soweit verschwenkt, dass der Kopplungsabschnitt 15a, welcher hakenförmig ausgebildet ist, gegen das als Bolzen ausgebildete zweite Begrenzungselement 16 geschlagen ist und dieses teilweise so umgreift, dass eine Verlagerung des Klappenteils 2 relativ zu dem Karosserieteil 50 begrenzt ist. Insbesondere wird durch die Begrenzungsanordnung 14 ein weiteres Absenken des Klappenteil 2 relativ zu den Karosserieteil 50 unterbunden, wobei durch das als Schenkelfeder ausgebildete Vorspannmittel 18 eine zusätzliche Dämpfung auftritt, welche insbesondere ein übermäßiges Nachschwingen der Klappe A nach dem Aufstellvorgang unterbindet.

Vorstehend wurde die Erfindung anhand eines Ausführungsbeispiels erläutert, bei dem die Gelenkanordnung als Viergelenk ausgebildet ist. Es versteht sich, dass die Gelenkanordnung auch als Eingelenk oder sonstige Varianten von Gelenken ausgebildet sein kann.

Vorstehend wurde die Erfindung anhand eines Ausführungsbeispiels erläutert, bei der die Begrenzungsanordnung zwei Begrenzungselement umfasste, von denen das erste Begrenzungselement drehbar an dem Klappenteil und das zweite Begrenzungselement ortsfest an einem ersten Lenker der Gelenkanordnung angeordnet ist. Es versteht sich, dass mehr als zwei Begrenzungselement von der Begrenzungsanordnung umfasst sein können und die Anordnung der Begrenzungselemente insoweit variiert werden kann, solange eine Begrenzung der Verlagerung des Klappenteil relativ zu dem Karosserieteil erfolgt. Insbesondere kann die Begrenzungsanordnung vollständig an der Gelenkanordnung angeordnet sein, welche eine gelenkige Verbindung des Klappenteil und des Karosserieteil herstellt.

Vorstehend wurde die Erfindung anhand eines Ausführungsbeispiels erläutert, bei dem ein Teil des Klappenteil als Anschlag für die Begrenzungsanordnung fungiert, um diese in der Passivstellung zu halten bzw. eine Verlagerung in die Begrenzungsstellung zu sperren. Es versteht sich, dass auch andere Bauteile des Klappenscharniers geeignet sein können einen entsprechenden Anschlag zu bilden. Beispielsweise könnten Teile der Verriegelungsvorrichtung, welche bei der Entriegelung verlagert werden, ebenfalls Anschlagflächen bereitstellen, welche bei einer Entriegelung und einer nachfolgenden Aufstellbewegung des Klappenscharniers derart verlagert werden, dass eine Verlagerung der Begrenzungsanordnung von einer Passivstellung in eine Begrenzungsstellung freigegeben wird.

## Patentansprüche

1. Aufstellbares Klappenscharnier (1), umfassend
ein einer Klappe (A) zugeordnetes Klappenteil (2),
ein einer Fahrzeugkarosserie (B) zugeordnetes Karosserieteil (50),
eine das Klappenteil (2) und das Karosserieteil (50) gelenkig verbindende Gelenkanordnung (25),
eine Auslöseanordnung (26), die das Klappenteil (2) gegenüber dem Karosserieteil (50) aufstellt,
eine Verriegelungsvorrichtung (8) zur Verriegelung einer Aufstellung des Klappenteils (2) gegenüber dem Karosserieteil (50), und
eine Begrenzungsanordnung (14) zur Begrenzung einer Verlagerung des Klappenteils (2) relativ zu dem Karosserieteil (50), wobei die Begrenzungsanordnung (14) ein erstes Begrenzungselement (15) und ein zweites Begrenzungselement (16) umfasst und bei einer Aufstellung des Klappenteils (2) gegenüber dem Karosserieteil (50) von einer Passivstellung in eine Begrenzungsstellung verlagert wird, wobei das erste Begrenzungselement (15) als Schwenkstütze ausgebildet ist, und
wobei die Schwenkstütze (15) über ein Vorspannmittel (18) in Richtung auf die Begrenzungsstellung vorgespannt ist,
**dadurch gekennzeichnet,**
**dass** das erste Begrenzungselement (15) an einem ersten Ende einen Kopplungsabschnitt (15a) aufweist, welcher für eine Kopplung mit dem zweiten Begrenzungselement (16) vorgesehen ist, und
**dass** das erste Begrenzungselement (15) an einem zweiten Ende einen Anschlagabschnitt (15b) aufweist.

2. Aufstellbares Klappenscharnier nach Anspruch 1, **dadurch gekennzeichnet, dass** das erste Begrenzungselement (15) um eine horizontale Achse schwenkbar an einem von Klappenteil (2), Gelenkanordnung (25) und Karosserieteil (50) angeordnet ist.

3. Aufstellbares Klappenscharnier nach einem der vorhergehenden Ansprüche, **dadurch gekennzeichnet, dass** das zweite Begrenzungselement (16) an einem von Klappenteil (2), Gelenkanordnung (25) und Karosserieteil (50) angeordnet ist.

4. Aufstellbares Klappenscharnier nach einem der vorhergehenden Ansprüche, **dadurch gekennzeichnet, dass** das zweite Begrenzungselement (16) an der Gelenkanordnung (25) und das erste Begrenzungselement (15) an einem von Klappenteil (2) und Karosserieteil (50) angeordnet ist.

5. Aufstellbares Klappenscharnier nach einem der vorhergehenden Ansprüche, **dadurch gekennzeichnet, dass** das erste Begrenzungselement (15) und das zweiten Begrenzungselement (16) derart miteinander gekoppelt sind, dass eine Verlagerung des Klappenteils (2) in Richtung auf das Karosserieteil (50) begrenzt wird.

6. Aufstellbares Klappenscharnier nach Anspruch 5, **dadurch gekennzeichnet, dass** die Kopplung zwischen dem ersten Begrenzungselement (15) und dem zweiten Begrenzungselement (16) derart ausgebildet ist, dass eine Verlagerung des Klappenteils (2) in Richtung weg von dem Karosserieteil (50) zumindest gebremst oder gedämpft wird.

7. Aufstellbares Klappenscharnier nach einem der vorhergehenden Ansprüche, **dadurch gekennzeichnet, dass** die Schwenkstütze (15) um eine horizontale Achse schwenkbar an dem Klappenteil (2) angeordnet ist.

8. Aufstellbares Klappenscharnier nach einem der vorhergehenden Ansprüche, **dadurch gekennzeichnet, dass** ein Anschlagelement (13) vorgesehen ist, welches bei einer Aufstellbewegung des Klappenscharniers derart verlagert wird, dass der Anschlagabschnitt (15b) freigegeben wird und eine Verlagerung des als Schwenkstütze ausgebildeten ersten Begrenzungselementes (15) in die Begrenzungsstellung freigegeben wird.

9. Aufstellbares Klappenscharnier nach einem der vorhergehenden Ansprüche, **dadurch gekennzeichnet, dass** der Kopplungsabschnitt (15a) als Haken ausgebildet ist.

10. Aufstellbares Klappenscharnier nach einem der vorhergehenden Ansprüche, **dadurch gekennzeichnet, dass** der Anschlagabschnitt (15b) eine Anschlagfläche aufweist, welche in der Passivstellung der Begrenzungsanordnung (14) dazu dient, eine Verlagerung des ersten Begrenzungselementes (15) in die Begrenzungsstellung zu verhindern.

11. Aufstellbares Klappenscharnier nach einem der vorhergehenden Ansprüche, **dadurch gekennzeichnet, dass** das zweite Begrenzungselement (16) als Bolzen ausgebildet ist.

12. Aufstellbares Klappenscharnier nach Anspruch 11, **dadurch gekennzeichnet, dass** der Bolzen (16) fest an einem ersten Lenker (21) der Gelenkanordnung (25) angeordnet ist.

13. Aufstellbares Klappenscharnier nach einem der vorhergehenden Ansprüche, **dadurch gekennzeichnet, dass** das Klappenteil (2) ein Klappenoberteil (3) und ein Klappenunterteil (4) umfasst, wobei das Klappenoberteil (3) und das Klappenunterteil (4) schwenkbar miteinander gekoppelt sind.

14. Aufstellbares Klappenscharnier nach Anspruch 13, **dadurch gekennzeichnet, dass** durch Verschwenkung des Klappenoberteils (3) und des Klappenunterteils (4) die Verlagerung der Begrenzungsanordnung (14) von der Passivstellung in die Begrenzungsstellung freigegeben wird.

15. Aufstellbares Klappenscharnier nach einem der vorhergehenden Ansprüche, **dadurch gekennzeichnet, dass** an dem Klappenoberteil eine Anschlagfläche (13) vorgesehen ist, welche eine Verlagerung der Begrenzungsanordnung (14) in die Begrenzungsstellung in der Passivstellung verhindert.

## Claims

1. Openable hood hinge (1), comprising
a hood part (2) assigned to a hood (A),
a body part (50) assigned to a vehicle body (B),
a joint arrangement (25) which hingedly connects the hood part (2) and the body part (50),
a release arrangement (26) which deploys the hood part (2) with respect to the body part (50),
a locking device (8) for locking the hood part (2) in its opened position with respect to the body part (50), and
a limiting arrangement (14) for limiting a movement of the hood part (2) relative to the body part (50), the limiting arrangement (14) comprising a first limiting element (15) and a second limiting element (16) and being moved from a passive position to a limiting position when the hood part (2) is deployed with respect to the body part (50),
the first limiting element (15) being designed as a pivoting support, and the pivoting support (15) being biased toward the limiting position by a biasing means (18),
**characterized in**
**that** the first limiting element (15) comprises a coupling portion (15a) at a first end, which coupling portion is provided for coupling to the second limiting element (16), and
**that** the first limiting element (15) comprises a stop portion (15b) at a second end.

2. Openable hood hinge according to claim 1, **characterized in that** the first limiting element (15) is arranged on one of the hood part (2), the joint arrangement (25) and the body part (50) so as to be pivotable about a horizontal axis.

3. Openable hood hinge according to either of the preceding claims, **characterized in that** the second limiting element (16) is arranged on one of the hood part (2), the joint arrangement (25) and the body part (50).

4. Openable hood hinge according to any of the preceding claims, **characterized in that** the second limiting element (16) is arranged on the joint arrangement (25), and the first limiting element (15) is arranged on one of the hood part (2) and the body part (50).

5. Openable hood hinge according to any of the preceding claims, **characterized in that** the first limiting element (15) and the second limiting element (16) are coupled to one another in such a way that a movement of the hood part (2) toward the body part (50) is limited.

6. Openable hood hinge according to claim 5, **characterized in that** the coupling between the first limiting element (15) and the second limiting element (16) is designed in such a way that a movement of the hood part (2) away from the body part (50) is at least braked or dampened.

7. Openable hood hinge according to any of the preceding claims, **characterized in that** the pivoting support (15) is arranged on the hood part (2) so as to be pivotable about a horizontal axis.

8. Openable hood hinge according to any of the preceding claims, **characterized in that** a stop element (13) is provided which is moved during an opening movement of the hood hinge in such a way that the stop portion (15b) is released and a movement of the first limiting element (15) designed as a pivoting support into the limiting position is allowed.

9. Openable hood hinge according to any of the preceding claims, **characterized in that** the coupling portion (15a) is designed as a hook.

10. Openable hood hinge according to any of the preceding claims, **characterized in that** the stop portion (15b) comprises a stop surface which, in the passive position of the limiting arrangement (14), is used to prevent the first limiting element (15) from moving into the limiting position.

11. Openable hood hinge according to any of the preceding claims, **characterized in that** the second limiting element (16) is designed as a bolt.

12. Openable hood hinge according to claim 11, **characterized in that** the bolt (16) is rigidly arranged on a first arm (21) of the joint arrangement (25).

13. Openable hood hinge according to any of the preceding claims, **characterized in that** the hood part (2) comprises an upper hood part (3) and a lower hood part (4), the upper hood part (3) and the lower hood part (4) being pivotably coupled to one another.

14. Openable hood hinge according to claim 13, **characterized in that** the movement of the limiting arrangement (14) from the passive position into the limiting position is allowed as a result of the upper hood part (3) and the lower hood part (4) being pivoted.

15. Openable hood hinge according to any of the preceding claims, **characterized in that** a stop surface (13) is provided on the upper hood part, which stop surface prevents movement of the limiting arrangement (14) into the limiting position in the passive position.

## Revendications

1. Charnière de volet relevable (1), comprenant
une partie côté volet (2) associée à un volet (A),
une partie côté carrosserie (50) associée à une carrosserie de véhicule (B),
un ensemble articulé (25) reliant la partie côté volet (2) et la partie côté carrosserie (50) de manière articulée,
un ensemble de déclenchement (26) qui relève la partie côté volet (2) par rapport à la partie côté carrosserie (50),
un dispositif de verrouillage (8) destiné à verrouiller un relèvement de la partie côté volet (2) par rapport à la partie côté carrosserie (50), et
un ensemble de limitation (14) destiné à limiter un déplacement de la partie côté volet (2) par rapport à la partie côté carrosserie (50), l'ensemble de limitation (14) comprenant un premier élément de limitation (15) et un deuxième élément de limitation (16) et étant déplacé, lors d'un relèvement de la partie côté volet (2) par rapport à la partie côté carrosserie (50), d'une position passive jusque dans une position de limitation,
le premier élément de limitation (15) étant conçu comme un support pivotant, et
le support pivotant (15) étant précontraint en direction de la position de limitation par le biais d'un moyen de précontrainte (18),
**caractérisée en ce**
**que** le premier élément de limitation (15) comporte à une première extrémité une portion d'accouplement (15a) qui est prévue pour un accouplement avec le deuxième élément de limitation (16), et
**que** le premier élément de limitation (15) comporte à une deuxième extrémité une portion de butée (15b).

2. Charnière de volet relevable selon la revendication 1, **caractérisée en ce que** le premier élément de limitation (15) est disposé de manière à pivoter sur un axe horizontal au niveau de l'un parmi la partie côté volet (2), l'ensemble articulé (25) et la carrosserie (50).

3. Charnière de volet relevable selon l'une des revendications précédentes, **caractérisée en ce que** le deuxième élément de limitation (16) est disposé au niveau de l'un parmi la partie côté volet (2), l'ensemble articulé (25) et la carrosserie (50).

4. Charnière de volet relevable selon l'une des revendications précédentes, **caractérisée en ce que** le deuxième élément de limitation (16) est disposé au niveau de l'ensemble articulé (25) et le premier élément de limitation (15) est disposé au niveau l'un parmi la partie côté volet (2) et la partie côté carrosserie (50).

5. Charnière de volet relevable selon l'une des revendications précédentes, **caractérisée en ce que** le premier élément de limitation (15) et le deuxième élément de limitation (16) sont accouplés l'un à l'autre de manière à limiter un déplacement de la partie côté volet (2) en direction de la partie côté carrosserie (50).

6. Charnière de volet relevable selon la revendication 5, **caractérisée en ce que** l'accouplement entre le premier élément de limitation (15) et le deuxième élément de limitation (16) est conçu de manière à au moins freiner ou amortir un déplacement de la partie côté volet (2) dans la direction opposée à la partie côté carrosserie (50).

7. Charnière de volet relevable selon l'une des revendications précédentes, **caractérisée en ce que** le support pivotant (15) est disposé au niveau de la partie côté volet (2) de manière à pouvoir pivoter sur un axe horizontal.

8. Charnière à volet relevable selon l'une des revendications précédentes, **caractérisée en ce qu'**il est prévu un élément de butée (13) qui est déplacé lors d'un mouvement de relèvement de la charnière de volet de manière à débloquer la portion de butée (15b) et à autoriser un déplacement du premier élément de limitation (15), conçu comme support pivotant, jusque dans la position de limitation.

9. Charnière de volet relevable selon l'une des revendications précédentes, **caractérisée en ce que** la portion d'accouplement (15a) est conçue comme un crochet.

10. Charnière à volet relevable selon l'une des revendications précédentes, **caractérisée en ce que** la portion de butée (15b) comporte une surface de butée qui, dans la position passive du dispositif de limitation (14), sert à empêcher un déplacement du premier élément de limitation (15) jusque dans la position de limitation.

11. Charnière de volet relevable selon l'une des revendications précédentes, **caractérisée en ce que** le deuxième élément de limitation (16) est conçu comme un boulon.

12. Charnière de volet relevable selon la revendication 11, **caractérisée en ce que** le boulon (16) est disposé de manière fixe au niveau d'un premier bras de liaison (21) de l'ensemble articulé (25).

13. Charnière de volet relevable selon l'une des revendications précédentes, **caractérisée en ce que** la partie côté volet (2) comprend une partie côté volet supérieure (3) et une partie côté volet inférieure (4), la partie côté volet supérieure (3) et la partie côté volet inférieure (4) étant accouplée de manière pivotante l'une à l'autre.

14. Charnière de volet relevable selon la revendication 13, **caractérisée en ce que** le déplacement l'ensemble de limitation (14) de la position passive à la position de limitation est débloqué par pivotement de la partie côté volet supérieure (3) et de la partie côté volet inférieure (4).

15. Charnière de volet relevable selon l'une des revendications précédentes, **caractérisée en ce qu'**une surface de butée (13) est prévue au niveau de la partie côté volet supérieure, laquelle surface de butée empêche dans la position passive le déplacement de l'ensemble de limitation (14) jusque dans la position de limitation.
